# EUROPÄISCHE PATENTSCHRIFT

(11) **EP 0 641 499 B1**
(45) Veröffentlichungstag und Bekanntmachung des Hinweises auf die Patenterteilung: **25.06.1997**
(21) Anmeldenummer: 93912716.3
(22) Anmeldetag: 19.05.1993
(51) Int. Cl.: H02K 17/04, H02K 5/12, H02K 7/10

(54) **ELEKTRISCHER ROTATORISCHER KRAFTFAHRZEUGS-ANTRIEBSMOTOR**
ROTATIONAL ELECTRIC VEHICLE DRIVE MOTOR
MOTEUR ELECTRIQUE ROTATIF D'ENTRAINEMENT D'UN VEHICULE

(30) Priorität: 22.05.1992 DE 4217099
(43) Veröffentlichungstag der Anmeldung: 08.03.1995
(73) Patentinhaber: Magnet-Motor Gesellschaft für magnetmotorische Technik mbH, D-82319 Starnberg (DE)
(72) Erfinder: EHRHART, Peter, D-8000 München 70 (DE)
(74) Vertreter: Klunker . Schmitt-Nilson . Hirsch
(86) Internationale Anmeldenummer: EP9301240
(87) Internationale Veröffentlichungsnummer: WO9324985

(56) Entgegenhaltungen:
- DE-A- 2 546 761
- DE-A- 2 828 590
- DE-A- 3 029 523
- DE-U- 8 616 742
- US-A- 4 604 030

## Beschreibung

Die Erfindung betrifft einen elektrischen rotatorischen Kraftfahrzeug-Antriebsmotor mit einem Innenstator, einem Außenrotor und einem auf dessen Außenseite vorgesehenen, abgedichteten Gehäuse.

Ein derartiger Antriebsmotor ist aus der EP-A-0 249 807 bekannt.

Speziell bei Kraftfahrzeugen, oder dort bei Schwerfahrzeugen (LKWs, Busse) sind neben leistungsfähigen Antriebsmotoren auch leistungsfähige Bremsen vonnöten.

Hier bieten sich zunächst die an sich bekannten mechanischen Reibungsbremsen (Trommelbremsen, Scheibenbremsen) an. Bei einem Fahrzeug mit elektrischem Fahrantrieb kann man daran denken, eine zusätzliche Bremsung durch generatorischen Betrieb der für den Antrieb vorgesehenen Elektromotoren zu bewirken.

Neben den für rasche Abbremsungen vorgesehenen "Leistungsbremsen" ist es zum Beispiel bei Bussen und Lastkraftwagen bekannt, sogenannte Retarderbremsen einzusetzen, das sind Aggregate, die im Gegensatz zu den "Leistungsbremsen" eine langandauernde Verzögerung bewirken. Solche Bremsen werden zum Beispiel bei langen Gefällestrecken eingesetzt, um zu verhindern, daß sich das Fahrzeug durch sein Eigengewicht auf der Gefällestrecke beschleunigt.

Beispiel für herkömmliche Retarderbremsen sind spezielle, als separate Baugruppen ausgeführte Hydraulik-Aggregate oder Wirbelstrombremsen.

Der vorliegenden Erfindung liegt die Aufgabe zugrunde, einen elektrischen Rotationsmotor anzugeben, bei dem die Funktion einer Retarderbremse realisiert ist, ohne daß hierzu ein nennenswerter zusätzlicher Platzbedarf erforderlich ist.

Gelöst wird diese Aufgabe bei einem Antriebsmotor der eingangs genannten Art erfindungsgemäß dadurch, daß eine wahlweise aktivierbare und deaktivierbare, hydrodynamische Bremse zwischen dem Außenrotor und dem Gehäuse ausgebildet ist.

Aus dem Dokument DE-A-3 029 523 ist ein Stromgenerator bekannt, dessen Außenrotor mit Laufschaufeln in mehreren Reihen besetst ist und der in einem Rohr angeordnet ist. An der Innenseite des Rohrs sind feststehende Leitschaufeln in mehreren Reihen angeordnet, und des Rohr wird von Fluid durchströmt. Durch die Strömung des Fluids wird des Generator in Rotation versetst.

Die hydrodynamische Bremse kann im Prinzip wie eine hydrodynamische Kupplung oder ein Drehmomentwandler arbeiten, wobei jedoch im Gegensatz zu solchen Aggregaten keine Vortriebskraft, sondern eine Bremswirkung erzielt wird.

Bei einem Bremsvorgang eines Fahrzeugs beispielweise wird Energie von dem mit dem Rotationsmotor gekoppelten Rad über die Antriebswelle und den Außenrotor in den Antriebsmotor eingeleitet. Bei Wirksamwerden der hydrodynamischen Bremse wird die Energie in Wärmeenergie umgewandelt.

In einer speziellen Ausgestaltung weist die erfindungsgemäße hydrodynamische Bremse folgende Merkmale auf:
a) außen an dem Außenrotor sind mitrotierende Laufschaufeln angeordnet,
b) innen an dem Gehäuse sind feststehende Leitschaufeln angeordnet,
c) in dem Raum zwischen den Schaufeln ist eine Hydraulikflüssigkeit eingefüllt.

Insbesondere ist der Außenrotor glockenförmig ausgebildet, wobei die Schaufeln bezüglich der Drehachse radial außen an dem Außenrotor bzw. an der Innenseite des Gehäuses angeordnet sind.

In seiner Funktion als Antriebseinheit muß der Elektromotor möglichst verlustfrei umlaufen können. Zur Erzielung einer Bremswirkung muß die hydrodynamische Bremse aktiviert werden, und zwar möglichst genau steuer- oder regelbar.

Hierzu schafft die Erfindung verschiedene Möglichkeiten. Eine Variante sieht vor, daß das Gehäuse einen Flüssigkeitseinlaß und einen Flüssigkeitsauslaß aufweist, über die die Menge der Hydraulikflüssigkeit in dem Raum und damit die Bremsleistung dosierbar ist. Bei einem Bremsvorgang kann man zum Beispiel Hydraulikflüssigkeit in den Raum zwischen Außengehäuse und Außenrotor einleiten, wobei die Bremswirkung umso größer ist, je mehr Flüssigkeit in den Raum eingeleitet wird. Zum "Lösen" der Retarderbremse wird die Hydraulikflüssigkeit wieder über den Flüssigkeitsauslaß entfernt. Dabei können die Schaufeln am Außenrotor bzw. am Gehäuse zum Fördern der Hydraulikflüssigkeit dienen.

Gemäß einer weiteren Variante sieht die Erfindung vor, daß die an dem Gehäuse angeordneten Leitschaufeln zumindest teilweise mit einer Verstellvorrichtung gekoppelt sind, mittels der die Bremsleistung einstellbar ist. Diese Verstellvorrichtung kann alternativ oder zusätzlich zu der oben erläuterten Möglichkeit vorgesehen sein, unterschiedliche Mengen von Hydraulikflüssigkeit in den Raum zwischen Gehäuse und Außenrotor einzuleiten.

Durch das Verstellen der Leitschaufeln an der Innenwand des Gehäuses läßt sich beim Betrieb des Motors als Antriebseinheit ein praktisch vernachlässigbarer Reibungsverlust erreichen. Wird die Retarderbremse aktiviert, indem die Leitschaufeln verstellt werden, so arbeitet der Außenrotor gegen durch die verstellten Leitschaufeln bewirkte Strömungen und verlangsamt sich.

Nach einer zweiten erfindungsgemäßen Lösung ist der Antriebsmotor der eingangs genannten Art dadurch gekennzeichnet, daß eine wahlweise aktivierbare und deaktivierbare Bremse vorgesehen ist die einen Pumpfluidkreislauf mit zuschaltbarem Strömungswiderstand und eine zwischen dem Außenrotor und dem Gehäuse ausgebildete, in den Pumpfluidkreislauf eingebundene Strömungspumpe aufweist.

Zweckmäßigerweise ist eine Regelvorrichtung vorgesehen, mit der die Bremsleistung der hydrodynamischen Bremse oder der Strömungspumpe aktiv regelbar ist.

Bei Betrieb als hydrodynamische Bremse muß die entstehende thermische Verlustleistung durch Kühlungsmaßnahmen am Motorgehäuse abgeführt werden.

Die Erfindung findet besondere Anwendung bei einem nicht-spurgebundenen Fahrzeug mit elektrischem Fahrantrieb, der mindestens einen elektrischen Rotationsmotor mit den oben erläuterten Merkmalen aufweist. Insbesondere kann die Bremse oder Strömungspumpe in Verbindung mit einem generatorischen Betrieb des Motors arbeiten, um eine erhöhte Bremsleistung zu erzielen.

Das Regeln der Bremsleistung mit Hilfe der Verstellvorrichtung ist besonders dann gut möglich, wenn der gesamte Raum zwischen Außenrotor und Gehäuse mit Flüssigkeit gefüllt ist. Nach dem oben erwähnten speziellen Ausführungsbeispiel sind die Schaufeln radial bezüglich der Drehachse außen an der (zylindrischen) Fläche des Außenrotors bzw. an der dieser Fläche gegenüberliegenden Innenwand des Gehäuses vorgesehen. Zusätzlich oder alternativ können auch Laufschaufeln an der Stirnseite des glockenförmigen Außenrotors und zusätzlich Leitschaufeln an der inneren Stirnseite des Gehäuses vorgesehen sein, wobei dann auch hier der Zwischenraum mit Hydraulikflüssigkeit/Pumpfluid gefüllt ist, wodurch eine Strömungspumpe ausgebildet wird. Man kann einen Hydraulik-Kreislauf mit einer Drosselstelle schaffen, in welchem die Hydraulikflüssigkeit entweder ungedrosselt zirkuliert, wenn die Bremse nicht aktiviert ist, oder in der die Hydraulikflüssigkeit über die Drosselstelle geführt wird, so daß die an der Drosselstelle umgesetzte Leistung der Bremsleistung entspricht.

Im folgenden wird ein Ausführungsbeispiel der Erfindung anhand der Zeichnung näher erläutert. Es zeigen:
- **Fig. 1**: eine Längsschnittansicht durch eine Ausführungsform eines elektrischen Rotationsmotors,
- **Fig. 2**: eine schematische vergrößerte Darstellung einer verstellbaren Leitschaufel im Rotationsmotor nach **Fig. 1**, und
- **Fig. 3**: eine Längsschnittansicht durch eine weitere Ausführungsform eines elektrischen Rotationsmotors.

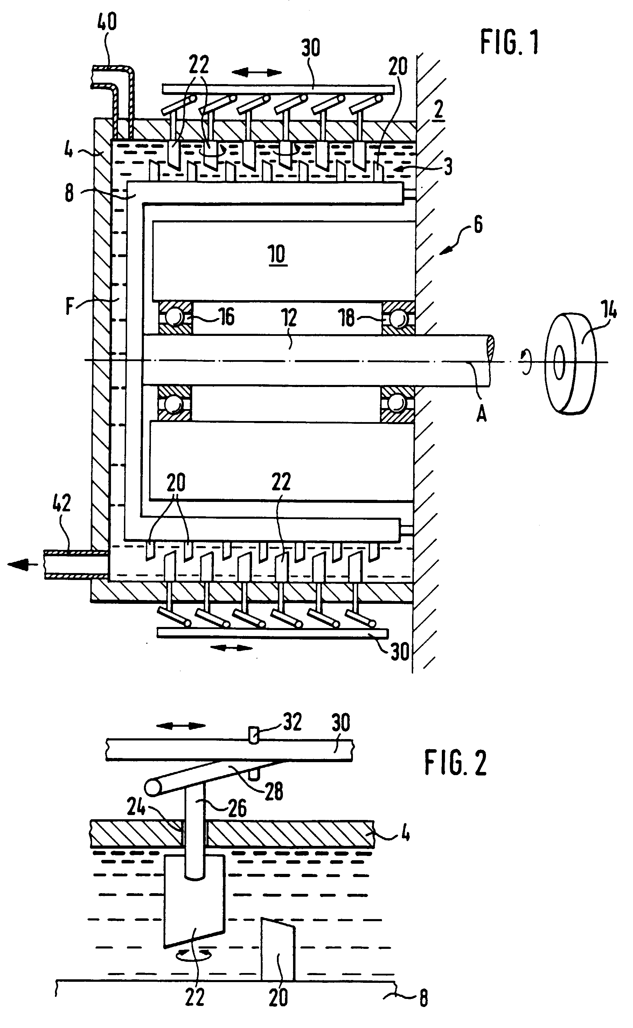

In **Fig. 1** ist in Längsschnittansicht ein elektrischer Rotationsmotor 6 dargestellt, der beim vorliegenden Ausführungsbeispiel zum direkten Antreiben eines Rades 14 eines hier nicht dargestellten Fahrzeugs dient. Der Elektromotor 6 ist über eine Antriebswelle 12 mit dem Rad 14 gekoppelt, welches sich um die für die Antriebswelle 12 und das Rad 14 gemeinsame Drehachse A dreht.

Der Elektromotor 6 wird von einem metallischen Motorgehäuse 4 umschlossen, welches becherförmig ausgebildet ist und mit seiner offenen Seite an einer Gehäusewand 2 abgedichtet befestigt ist.

In dem durch die Gehäusewand 2 und das Motorgehäuse 4 gebildeten Innenraum sitzt auf dem linken Ende der Antriebswelle 12 ein glockenförmiger Rotor 8, in dessen Innenraum sich ein feststehender Innenstator 10 befindet. Die Antriebswelle 12 ist mittels Lagern 16 und 18 im Inneren des Innenstators 10 gelagert.

Der spezielle Aufbau des Elektromotors mit dem Innenstator 10 und dem glockenförmigen Außenrotor 8 ist an sich bekannt und soll hier nicht näher erläutert werden. Der Außenrotor 8 ist als Permanentmagnet-Rotor ausgebildet.

In dem Innenraum zwischen dem Motorgehäuse 4 und dem glockenförmigen Außenrotor 8 befindet sich eine Hydraulikflüssigkeit F, die über einen Flüssigkeitseinlaß 40 eingeleitet und über einen Flüssigkeitsauslaß 42 ausgeleitet werden kann.

Auf der zylindrischen Außenfläche des Außenrotors 8 ist eine Vielzahl von mit dem Außenrotor 8 mitrotierenden Laufschaufeln 20 angeordnet, die in Zwischenräume von feststehenden Leitschaufeln 22 teilweise eingreifen. Die Leitschaufeln 22 sind an der zylindrischen Innenwand des Motorgehäuses 4 gelagert.

Wie im folgenden noch näher ausgeführt wird, lassen sich die Leitschaufeln 22 an der Innenwand des Motorgehäuses 4 durch Verschwenken so verstellen, daß sie in ihrer Wirkung entweder neutral sind oder aber in Zusammenwirken mit den am Außenrotor 8 angeordneten Laufschaufeln 20 solche Strömungen der Hydraulikflüssigkeit F bewirken, daß auf den Aussenrotor 8 eine Bremswirkung ausgeübt wird.

Wie oben in **Fig. 1** und im einzelnen in **Fig. 2** dargestellt ist, wird jede Leitschaufel 22 an der Innenwanddes Motorgehäuses 4 von einer Lagerwelle 26 gehalten, die ein Drehlager 24 in dem Motorgehäuse 4 durchsetzt. Am äußeren Ende jeder Lagerwelle 26 befindet sich ein Schwenkhebel 28, der über einen Lagerstift 32 mit einer Stellstange 30 gekoppelt ist.

Die Stellstange 30 ist mit jeweils einer Reihe von Leitschaufeln 22 über die Elemente 26, 28 und 32 gekoppelt. Durch translatorische Bewegung der Stellstange 30 läßt sich die Winkelstellung der Leitschaufeln 22 jeweils einer Reihe genau einstellen. Dadurch läßt sich auch die Bremswirkung der durch die Leitschaufeln 20 und 22 sowie die Hydraulikflüssigkeit F gebildeten hydrodynamischen Bremse steuern.

In der Zeichnung nicht dargestellt ist eine Elektronik, die den Elektromotor 6 speist und außerdem Zustandssignale von dem Elektromotor empfängt. Mit Hilfe dieser Elektronik läßt sich die Verzögerung des Elektromotors 6 ermitteln. Dementsprechend läßt sich auch die gewünschte Bremsleistung regeln, indem
(a) entweder die Füllmenge der Hydraulikflüssigkeit F innerhalb des Raums zwischen dem Außenrotor 8 und dem Motorgehäuse 4 variiert wird,
(b) oder die Stellung der Leitschaufeln 22 an der Innenwand des Motorgehäuses 4 variiert wird,
(c) die Möglichkeiten (a) und (b) kombiniert werden.

In **Fig. 1** sind lediglich zwei Reihen von Laufschaufeln 20 an der Außenseite des Außenrotors 8 und zwei Reihen von Leitschaufeln 22 an der Innenwand des Motorgehäuses 4 dargestellt. Tatsächlich sind über den Umfang verteilt, mehrere Reihen von Schaufeln jeweils am Außenrotor 8 und an der Innenwand des Motorgehäuses 4 vorgesehen.

In einer alternativen Ausführungsform können alternativ oder zusätzlich zu den in **Fig. 1** dargestellten Schaufeln auch an der links in **Fig. 1** skizzierten Stirnseite des glockenförmigen Außenrotors 8 Laufschaufeln vorgesehen sein, wodurch eine Strömungspumpe realisiert wird.

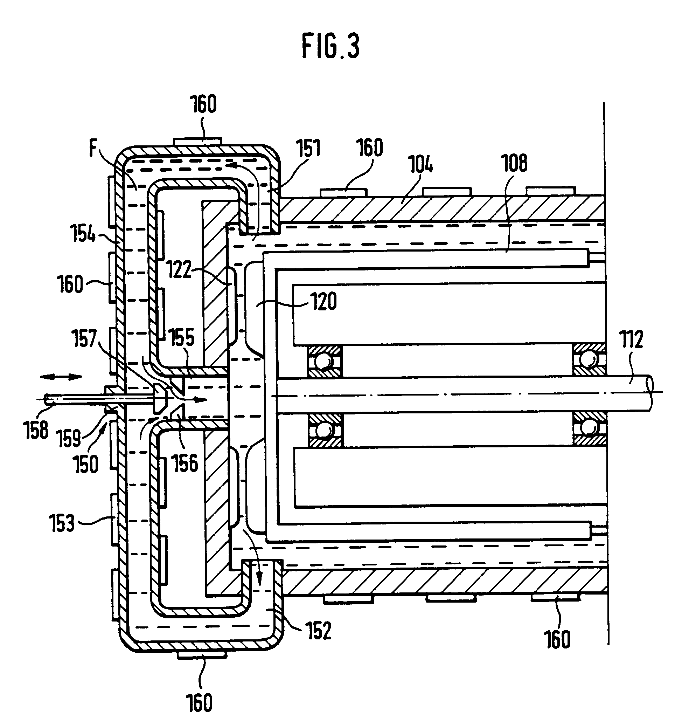

**Fig. 3** zeigt eine derartige alternative Ausführungsform. Hier nicht näher beschriebene Teile des Rotationsmotors entsprechen der Ausführungsform nach **Fig. 1** und werden hier nicht nochmals erläutert.

In dem becherförmigen Gehäuse 104 ist der Motor mit einem Außenrotor 108 untergebracht.

An der Stirnseite des becherförmigen Außenrotors 108 sind sich radial erstreckende Laufschaufeln 120 angeordnet. Diesen liegen in einigem Abstand radial orientierte Leitschaufeln 122 an der stirnseitigen Innenwand des Gehäuses 104 gegenüber. Auf letztgenannte Leitschaufeln könnte auch verzichtet werden.

Durch die Drehung des Außenrotors 108 erhält die in den Raum zwischen Rotor 108 und Gehäuse 104 eingefüllte Hydraulikflüssigkeit F eine radial nach außen gerichtete Strömungkomponente, was durch Pfeile angedeutet ist, die sich durch zwei radiale Flüssigkeitsauslässe 151, 152 erstrecken.

Die radial orientierten Flüssigkeitsauslässe 151 und 152 sind etwa mit den Schaufeln 120, 122 ausgerichtet, so daß die radiale Flüssigkeitsströmung in die Flüssigkeitsauslässe 151, 152 und von dort über Rücklaufkanäle 153 und 154 und einen Flüssigkeitseinlaß 155 wieder in den Raum innerhalb des Gehäuses 104 gelangt.

Der Flüssigkeitseinlaß 155 ist mit der Drehwelle 112 des Rotationsmotors ausgerichtet.

Durch die oben beschriebenen Maßnahmen wird eine Strömungspumpe gebildet, die die in dem Gehäuse 104 enthaltene Hydraulikflüssigkeit bzw. das Pumpfluid F laufend umzuwälzen vermag, wobei der Kreislauf von dem mittigen Bereich vor dem Außenrotor 108 (Saugseite) über den Bereich zwischen den Schaufeln 120, 122, die Flüssigkeitsauslässe 151, 152, die Rücklaufkanäle 154, 153 und den Flüssigkeitseinlaß 155 gebildet wird.

In diesem Strömungskreislauf ist als Verbraucher ein Ventil 150 vorgesehen. Das Ventil ist hier im Prinzip vereinfacht dargestellt. Im Inneren des Flüssigkeitseinlasses 155 befindet sich ein ringförmiger Ventilsitz 156, mit dem ein Ventilkörper 157 in Eingriff bringbar ist. Hierzu ist der Ventilkörper mittels einer Ventilstange 158 in Richtung des dargestellten Doppelpfeils beweglich. Je nach Einstellung des Ventilkörpers 157 wird zwischen diesem und dem Ventilsitz 156 ein mehr oder weniger großer Durchlaßspalt gebildet, der zum Abbremsen des Motors als Drosselspalt fungiert. Im Extremfall kann das Ventil 150 vollständig geschlossen werden, so daß praktisch keine umlaufende Strömung erzeugt und durch die Verwirbelung des Pumpfluids im Bereich der Leitschaufeln 120 und 122 eine erhebliche Bremsleistung im Bereich der Leitschaufeln abgeführt werden muß.

Das Ausmaß der Abbremsung läßt sich einstellen, indem die beispielsweise in einem Gewindelager 159 gelagerte Ventilstange 158 entsprechend eingestellt wird.

Wenn das Ventil 150 vollständig geöffnet ist, wird die Drehung des Motors durch den Betrieb der Strömungspumpe belastet, jedoch kann die Belastung durch vollständiges Öffnen des Ventils 150 relativ niedrig gehalten werden.

Beim Abbremsen des Motors wird das Ventil in die geschlossene Stellung bewegt. Die Bremsenergie wird in thermische Energie umgesetzt. Die Wärmeableitung erfolgt beispielsweise mit Hilfe von Kühlrippen 160, die an verschiedenen Stellen der das Fluid führenden Leitungselemente angebracht sind.

## Patentansprüche

1. Elektrischer rotatorischer Kraftfahrzeug-Antriebsmotor mit einem Innenstator (10) und einem Außenrotor (8), auf dessen Außenseite ein abgedichtetes Gehäuse (2,4) vorgesehen ist,
**dadurch gekennzeichnet**,
daß eine wahlweise aktivierbare und deaktivierbare, hydrodynamische Bremse (F,20,22) zwischen dem Außenrotor (8) und dem Gehäuse (2,4) ausgebildet ist.

2. Motor nach Anspruch 1,
**dadurch gekennzeichnet,**
daß die hydrodynamische Bremse aufweist:
(a) außen an dem Außenrotor (8) angeordnete, mitrotierende Laufschaufeln (20),
(b) innen an dem Gehäuse (4) angeordnete, feststehende Leitschaufeln (22), und
(c) in dem Raum (3) zwischen den Schaufeln (20,22) eingeführte hydraulikflüssigkeit (F).

3. Motor nach Anspruch 2,
**dadurch gekennzeichnet,**
daß der Außenrotor (8) glockenförmig ausgebildet ist, wobei die Schaufeln (20,22) bezüglich der Drehachse (A) radial außen an dem Außenrotor (8) bzw. an der Innenseite des Gehäuses (4) angeordnet sind.

4. Motor nach einem der Ansprüche 1 bis 3,
**dadurch gekennzeichnet,**
daß das Gehäuse (4) mit einem Flüssigkeitseinlaß (40) und einem Flüssigkeitsauslaß (42) versehen ist, über die die Menge der Hydrauligkflüssigkeit (F) in dem Raum (3) und damit die Bremsleistung dosierbar ist.

5. Motor nach einem der Ansprüche 2 bis 4,
**dadurch gekennzeichnet,**
daß die an dem Gehäuse (4) angeordneten Leitschaufeln (22) zumindest teilweise mit einer Verstellvorrichtung (26-32) gekoppelt sind, mittels der die Bremsleistung einstellbar ist.

6. Motor nach Anspruch 1 bis 5,
**dadurch gekennzeichnet,**
daß das Gehäuse eine außen angeordnete Kühleinrichtung (160) zur Abfuhr der von der hydrodynamischen Bremse erzeugten thermischen Leistung aufweist.

7. Elektrischer rotatorischer Kraftfahrzeug-Antriebsmotor mit einem Innenstator (10) und einem Außenrotor (108), auf dessen Außenseite ein abgedichtetes Gehäuse (104) vorgesehen ist,
**dadurch gekennzeichnet,**
daß eine wahlweise aktivierbare und deaktivierbare Bremse vorgesehen ist die einen Pumpfluidkreislauf mit zuschaltbarem Strömungswiderstand (156, 157) und eine zwischen dem Außenrotor (108) und dem Gehäuse (104) ausgebildete, in den Pumpfluidkreislauf eingebundene Strömungs-Pumpe aufweist.

8. Motor nach Anspruch 7,
**dadurch gekennzeichnet,**
daß die Strömungs-Pumpe aufweist:
(a) stirnseitig am glockenförmigen Außenrotor (108) angeordnete Laufschaufeln (120),
(b) vorzugsweise, innen am Gehäuse (104) angeordnete, feststehende Leitschaufeln (122), und
(c) im Raum zwischen den Schaufeln eingeführte Hydraulikflüssigkeit/Pumpfluid (F).

9. Motor nach Anspruch 7 und 8,
**dadurch gekennzeichnet,**
daß das Gehäuse (104) mit einem stirnseitig axialen Flüssigkeitseinlaß (155) und mindestens einem radial außen angeordneten Flüssigkeitsauslaß (151,152) versehen ist, an denen ein Verbraucher (150) der Strömungsleistung und damit der Bremsleistung vorgesehen ist.

10. Motor nach einem der Ansprüche 1 bis 9,
**gekennzeichnet** durch
eine Regelvorrichtung, mit der die Bremsleistung der Bremse aktiv regelbar ist.

11. Nicht-spurgebundenes Fahrzeug, das mindestens einen Antriebsmotor nach einem der Ansprüche 1 bis 10 aufweist.

12. Fahrzeug nach Anspruch 11,
**dadurch gekennzeichnet,**
daß der Motor als Generator betreibbar ist.

## Claims

1. A rotational electric motor vehicle drive motor comprising a internal stator (10) and an external rotor (8) having a sealed casing (2, 4) provided on the outside thereof,
characterized in that a hydrodynamic brake (F, 20, 22) adapted to be selectively activated and deactivated is formed between said external rotor (8) and said casing (2, 4).

2. A motor according to claim 1,
characterized in that said hydrodynamic brake comprises:
(a) concomitantly rotating moving blades (20) disposed on the outside of said external rotor (8),
(b) fixed guide blades (22) disposed internally on said casing (4), and
(c) hydraulic liquid (F) introduced in the space (3) between said blades (20, 22).

3. A motor according to claim 2,
characterized in that said external rotor (8) is bell-shaped, with said blades (20, 22) being disposed, with respect to the axis of rotation (A), radially outside on said external rotor (8) and on the inside of said casing (4), respectively.

4. A motor according to any one of claims 1 to 3,
characterized in that said casing (4) is provided with a liquid inlet (40) and a liquid outlet (42) through which the amount of hydraulic liquid (F) in said space (3) and thus the braking power can be metered.

5. A motor according to any one of claims 2 to 4,
characterized in that the guide blades (22) disposed on said casing (4) are coupled at least in part with an adjusting means (26 to 32) through which said braking power can be adjusted.

6. A motor according to claims 1 to 5,
characterized in that the casing comprises an externally disposed cooling means (160) for dissipating the thermal energy produced by the hydrodynamic brake.

7. A rotational electric motor vehicle drive motor comprising an internal stator (10) and an external rotor (108) having a sealed casing (104) provided on the outside thereof,
characterized in that a brake is provided which is adapted to be selectively activated and deactivated and which comprises a pumping fluid circuit having a flow resistance (156, 157) adapted to be actuated, as well as a flow pump formed between said external rotor (108) and said casing (104) and incorporated in said pumping fluid circuit.

8. A motor according to claim 7,
characterized in that said flow pump comprises:
(a) moving blades (120) disposed on the face side of said bell-shaped external rotor (108),
(b) preferably, fixed guide blades (122) disposed on the inside of said casing (104), and
(c) hydraulic liquid/pumping fluid (F) introduced in the space between said blades.

9. A motor according to claims 7 and 8,
characterized in that said casing (104) is provided with an axial liquid inlet (155) on the face side and with at least one liquid outlet (151, 152) at a radially outer location, to both of which a consumer (150) for the flow power and thus the braking power is connected.

10. A motor according to any one of claims 1 to 9,
characterized by a regulating means adapted to actively regulate the braking power of the brake.

11. A non-track-bound vehicle comprising at least one drive motor according to any one of claims 1 to 10.

12. A vehicle according to claim 11,
characterized in that the motor is adapted to be operated as a generator.

## Revendications

1. Moteur électrique rotatif de véhicule comprenant un stator intérieur (10) et un rotor extérieur (8), du côté extérieur duquel est prévu un carter étanche (2, 4),
caractérisé en ce que
un frein hydrodynamique pouvant être activé et désactivé à volonté (F, 20, 22) est formé entre le rotor extérieur (8) et le carter (2,4).

2. Moteur selon la revendication 1,
caractérisé en ce que
le frein hydrodynamique présente :
(a) des ailettes (20) disposées extérieurement sur le rotor (8) et tournant avec ce dernier,
(b) des ailettes directrices (22) fixes disposées à l'intérieur du carter (4), et
(c) un liquide hydraulique (F) introduit dans l'espace (3) entre les ailettes (20, 22).

3. Moteur selon la revendication 2,
caractérisé en ce que
le rotor extérieur (8) est réalisé en forme de cloche les ailettes (20, 22) étant disposées par rapport à l'axe de rotation (A) radialement à l'extérieur sur le rotor extérieur (8), respectivement sur la face intérieure du carter (4).

4. Moteur selon l'une quelconque des revendications 1 à 3,
caractérisé en ce que
le carter (4) est pourvu d'une admission de liquide (40) et d'une évacuation de liquide (42) par lesquelles la quantité de liquide hydraulique (F) dans l'espace (3) et ainsi la puissance de freinage peut être dosée.

5. Moteur selon l'une quelconque des revendications 2 à 4,
caractérisé en ce que,
les ailettes directrices (22) disposées sur le carter (4) sont couplées au moins partiellement avec un dispositif de réglage (26-32) au moyen duquel la puissance du freinage peut être réglée.

6. Moteur selon l'une quelconque des revendications 1 à 5,
caractérisé en ce que
le carter présente un moyen de refroidissement (160) disposé extérieurement destiné à l'évacuation de la puissance thermique générée par le frein hydrodynamique.

7. Moteur électrique rotatif de véhicule comprenant un stator intérieur (10) et un rotor extérieur (8), du côté extérieur duquel est prévu un carter étanche (2, 4),
caractérisé en ce que
un frein hydrodynamique pouvant être activé et désactivé à volonté est prévu, qui présente un circuit de circulation forcée de fluide pourvu d'une résistance à l'écoulement (156, 157) pouvant être mise en service et une pompe de circulation incorporée au circuit de circulation forcée de fluide, formée entre le rotor extérieur (108) et le carter (104).

8. Moteur selon la revendication 7,
caractérisé en ce que
la pompe de circulation présente :
(a) des ailettes directrices (120) disposées frontalement sur le rotor extérieur en forme de cloche (108),
(b) de préférence, des ailettes directrices (122) fixes disposées à l'intérieur du carter (104), et
(c) du liquide de pompage / liquide hydraulique (F) introduit dans l'espace entre les ailettes.

9. Moteur selon la revendication 7 et 8,
caractérisé en ce que
le carter (104) est pourvu d'une admission de liquide axiale frontale (155) et d'au moins une évacuation de liquide (151, 152) disposée radialement vers l'extérieur sur lesquelles est prévu un limiteur du débit (150) et par là de la puissance de freinage.

10. Moteur selon l'une quelconque des revendications 1 à 9,
caractérisé par
un dispositif de réglage à l'aide duquel la puissance de freinage peut être réglée activement.

11. Véhicule non guidé présentant au moins un moteur selon l'une quelconque des revendications 1 à 10.

12. Moteur selon la revendication 11,
caractérisé en ce que
le moteur peut être exploité en générateur.
